# EUROPÄISCHE PATENTSCHRIFT

(11) **EP 0 924 218 B1**
(45) Veröffentlichungstag und Bekanntmachung des Hinweises auf die Patenterteilung: **07.05.2003**
(21) Anmeldenummer: 98123785.2
(22) Anmeldetag: 15.12.1998
(51) Int. Cl.: C07F 9/50, C07C 45/50, C07F 9/54, C07C 211/63, B01J 31/24

(54) **Nichtwässrige ionogene Ligandflüssigkeiten, Verfahren zu ihrer Herstellung und ihre Verwendung als Katalysatorbestandteil**
Non aqueous ionogen liquid ligands, process for their preparation and their use as components for catalysts
Ligands liquides ionogènes non aqueux, procédé pour leur préparation et leur utilisation comme constituants de catalyseurs

(30) Priorität: 22.12.1997 DE 19756945
(43) Veröffentlichungstag der Anmeldung: 23.06.1999
(73) Patentinhaber: Celanese Chemicals Europe GmbH, 60439 Frankfurt am Main (DE)
(72) Erfinder: Bahrmann, Helmut Dr., 46499 Hamminkeln (DE); Schulte, Markus Dr., 46147 Oberhausen (DE)

(56) Entgegenhaltungen:
- EP-A- 0 163 233
- EP-A- 0 254 937
- EP-A- 0 302 375
- EP-A- 0 776 880
- FR-A- 2 314 910

## Beschreibung

Die vorliegende Erfindung betrifft nichtwäßrige lonogene Ligandflüssigkeiten der allgemeinen Formel (Q^{⊕})ₐ A^{a-}, in denen Q^{⊕} ein quaternäres einfach geladenes Ammoniumund/oder Phosphonium-Kation ist oder das Äquivalent eines mehrfachgeladenen Ammonium- und/oder Phosphonium-Kation ist und A^{a-} ein sulfoniertes Triarylphosphin bedeutet, ein Verfahren zu ihrer Herstellung sowie ihre Verwendung als Katalysatorbestandteil.

Viele wirtschaftlich bedeutende chemische Prozesse, wie zum Beispiel die Hydroformylierungsreaktion, die Hydrierung oder die Dimerisierung von Olefinen, werden in Gegenwart einer katalytisch wirkenden Übergangsmetallverbindung durchgeführt. Die katalytisch wirkenden Übermetallverbindungen enthalten als Übergangsmetall zum Beispiel Metalle der Gruppe VIII des Periodensystems der Elemente und als Liganden zum Beispiel Kohlenmonoxid und tertiäre Arylphosphine.

Derartige Prozesse können einphasig in einer organischen Phase durchgeführt werden. Dabei liegt der Katalysator, zum Beispiel ein Rhodium/Triphenylphosphinkomplex, gelöst in dem organischen Reaktionsgemisch vor.

Probleme wirft bei diesem Verfahren jedoch die Abtrennung der Reaktionsprodukte und die Wiedergewinnung der im Reaktionsprodukt homogen gelösten Katalystoren auf. Im allgemeinen destilliert man hierzu das Umsetzungsprodukt aus dem Reaktionsgemisch ab. Probleme in der Praxis können jedoch auftreten, wenn die gebildeten Reaktionsprodukte thermisch empfindlich sind. Außerdem kann die thermische Belastung des Destillationsgutes zu erheblichen Verlusten an Produkt durch Nebenproduktbildung und Verlusten an Katalysator durch Zersetzung der katalytisch wirksamen Komplexverbindungen führen.

Diese Mängel lassen sich vermeiden, wenn derartige Prozesse in einem Zweiphasensystem durchgeführt werden. Ein Beispiel für einen in Gegenwart einer katalytisch wirkenden Übergangsmetallverbindung durchgeführten Prozeß, der in einem Zweiphasensystem durchgeführt wird, ist in der DE-PS 26 27 354 beschrieben. Dieser Prozeß ist charakterisiert durch das Vorliegen einer organischen Phase, die die Ausgangsolefine und das Reaktionsprodukt enthält und einer wäßrigen Phase, in der der Katalysator gelöst ist. Als Katalysatoren werden wasserlösliche Rhodiumkomplexverbindungen eingesetzt, die wasserlösliche Phosphine als Liganden enthalten. Zu den Phosphinen zählen insbesondere Triarylphosphine, Trialkylphosphine und arylierte bzw. alkylierte Diphosphine, deren organische Reste durch Sulfonsäuregruppen oder Carboxylgruppen substituiert sind. Ihre Herstellung ist z.B. aus DE-PS 26 27 354 bekannt.

Die Anwendung einer wäßrigen katalysatorhaltigen Phase in anderen chemischen Prozessen, z.B. in der Hydrierung oder in der Hydrodimerisierung ist aus Applied Homogeneous Catalysis in Organometallic Compounds, Volume 2, 1996 VCH Publishers, New York und Angew. Chem. Int. Ed. Engl. 1993, 32, 1524-1544 bekannt.

Voraussetzung für eine erfolgreiche Durchführung des Zweiphasenprozesses mit einer wäßrigen Katalysatorlösung ist neben der ausreichenden Löslichkeit des umzusetzenden Substrates in der wäßrigen Phase auch eine ausreichende Stabilität des Katalysatorkomplexes gegenüber Wasser. Wasserempfindliche Katalysatorkomplexe lassen sich daher nach dem Zweiphasenprozeß in Gegenwart einer wäßrigen katalysatorhaltigen Phase nicht umsetzen.

Um diesen Nachteil zu überwinden ohne auf den Vorteil des zweiphasig durchgeführten Prozesses zu verzichten, wird die Verwendung von nichtwäßrigen ionogenen Flüssigkeiten als Lösungsmittel für Katalysatorkomplexe vorgeschlagen.

Nach CHEMTECH, September 1995, Seiten 26 bis 30 lassen sich nichtwäßrige, bei Raumtemperatur flüssige ionogene Flüssigkeiten, z.B. eine Mischung aus 1,3-Dialkylimidazolium Chlorid, bevorzugt 1-n-Butyl-3-methylimidazolium Chlorid, und Aluminiumchlorid und/oder Ethylaluminiumdichlorid, als nichtwäßrige Lösungsmittel verwenden, die den Katalysatorkomplex gelöst enthalten. Das 1-n-Butyl-3-methylimidazolium Kation wird im Stand der Technik mit BMI^{⊕} abgekürzt. Als Beispiele für derart erfolgreich durchgeführte Reaktionen sind die Olefindimerisierung in Gegenwart von Nickelkomplexen, z.B. die Propendimerisierung zu isomeren Hexenen oder die Butendimerisierung zu Iso-Octenen zu nennen. Das Reaktionsprodukt bildet die obere Phase, während die katalysatorhaltige nichtwäßrige ionogene Flüssigkeit die untere Phase bildet und durch einfache Phasentrennung abgetrennt werden kann. Die katalysatorhaltige nichtwäßrige ionogene Flüssigkeit kann erneut in den Prozeß eingeführt werden.

Aus Am. Chem. Soc., Div. Pet. Chem (1992), 37, Seiten 780 bis 785 ist bekannt, daß eine nichtwäßrige ionogene Flüssigkeit, bestehend aus 1-n-Butyl-3-methylimidazolium Chlorid und Aluminiumchlorid als Lösungsmittel dient, in dem nach Zusatz von Ethylaluminiumdichlorid und NiCl₂ (PR₃)₂ mit R gleich Isopropyl die Dimerisierung von Propen erfolgt.
Die Verwendung von niedrig schmelzenden Phosphoniumsaizen, z.B. von Tetrabutylphcsphcnium-Bromid als Lösungsmittel in Hydroformylierungsreaktionen wird im Journal of Molecular Catalysis, 47 (1988) Seiten 99 - 116 offenbart. Danach führt die Hydroformylierung von Olefinen, z.B.Octen-1, mit Rutheniumcarbonylkomplexen in Gegenwart von stickstoff- oder phosphorhaltigen Liganden, z.B. von 2,2'-Dipyridin oder 1,2-Bis(diphenylphosphino)-ethan, bei Temperaturen von 120 bis 180 °C zu einem Gemisch aus n-Nonanol und n-Nonanal. Bei diesem Verfahren fällt n-Nonanol mit bis zu 69 Gew.-%, bezogen auf das Reaktionsgemisch an, so daß zur Isolierung des gewünschten n-Nonanal eine aufwendige Destillation erforderlich ist.

Die'europäische Patentanmeldung EP-A-0 776 880 offenbart die Hydroformylierung von Olefinen in Gegenwart von quaternären Ammonium- und/oder Phosphoniumsalzen als Lösungsmittel, wobei als Kation vorzugsweise das 1-n-Butyl-3-methylimidazolium Kation 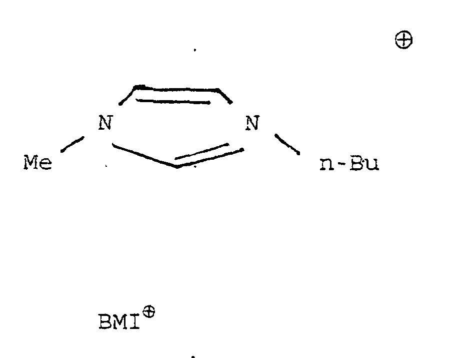 verwendet wird. Aber auch Salze von quaternären Diaminen, bei denen das Kation die allgemeine Formel

R¹R²N^{⊕}=CR³-R⁵CR³ =N^{⊕}R¹R²

hat, wobei R¹, R², R³ gleich oder verschieden sind und Wasserstoff oder einen Kohlenwasserstoffrest mit 1 bis 12 Kohlenstoffatomen und R⁵ Alkylen, z.B. Methylen, Ethylen oder Propylen oder Phenylen, bedeuten, werden verwendet. Geeignete Anionen sind beispielsweise Hexafluorophosphat, Hexafluoroantimonat, Tetrachloroaluminat oder Tetrafluoroborat. Diese quaternären Ammonium- und/oder Phosphoniumsalze sind bereits unterhalb von 90°C, vorzugsweise unterhalb von 85°C und besonders bevorzugt unterhalb von 50°C flüssig. In ihnen liegt der Hydroformylierungskatalysator gelöst vor.

Der Hydroformylierungskatalysator enthält als aktives Metall Kobalt, Rhodium, Iridium, Ruthenium, Palladium oder Platin und als Ligand ein tertiäres Phosphin oder tertiäres sulfoniertes Phosphin, ein tertiäres Arsin, tertiäres Stibin oder ein Phosphit. Nach der Lehre von EP-A-0 776 880 beträgt das Molverhältnis Ligand zu Metall 9,5.

Geeignete, die aktiven Metalle enthaltende Verbindungen, aus denen sich unter den Reaktionsbedingungen der Hydroformylierungskatalysator bildet, sind beispielsweise Rhodiumacetylacetonatdicarbonyl oder das Rhodiumcarbonyl Rh₆(CO)₁₆.

Besonders bevorzugt wird die Hydroformylierungsreaktion zwischen 30 und 90°C durchgeführt.

Auch nach Angew. Chem. 1995, 107 Nr.23/24 Seiten 2941 bis 2943 lassen sich Hydroformylierungsreaktionen unter Verwendung bei Raumtemperatur flüssiger 1,3 Dialkylimidazoliumsalze als katalysatorhaltiges, nicht mit dem organischen Reaktionsgemisch mischbares Lösungsmittel durchführen. Dabei wird Rhodiumdicarbonylacetylacetonat als Katalysatorvorstufe zu einer Lösung von Triphenylphosphin in BMI^{⊕} Hexafluorophosphat gegeben , wobei das Molverhältnis Phosphor (III) zu Rhodium von 3 bis 10 variieren kann. Unter Zugabe von Synthesegas mit einer Zusammensetzung von Wasserstoff zu Kohlenmonoxid im Volumenverhältnis von 1:1, wird der Katalysator präformiert. Nach Zugabe von n-Penten-1 erfolgt die Umsetzung mit Synthesegas gleicher Zusammensetzung bei einer Temperatur von 80 °C. Auch in diesem Falle läßt sich die organische Produktphase in einfacher Weise von der katalysatorhaltigen nichtwäßrigen ionogenen Flüssigkeit durch Abdekantieren abtrennen.

Die bekannten Verfahren sind durch die Verwendung einer nichtwäßrigen ionogenen Flüssigkeit, die als Lösungsmittel für den katalytisch wirksamen Metallkomplex dient, charakterisiert. Durch die Verwendung der nichtwäßrigen ionogenen Flüssigkeit werden zusätzliche, nicht als Liganden dienende Anionen ,z.B. Hexafluoroantimonat oder Hexafluorophosphat, in den Prozeß eingebracht.

Weiterhin lehrt der aus Angew. Chem. 1995, 107 Nr. 23/24 Seiten 2941 bis 2943 und EP-A-0 776 880 bekannte Stand der Technik ein Molverhältnis Ligand/Metall, z.B. ein Molverhältnis Phosphor zu Rhodium, von 3 bis 10. Höhere Molverhältnisse von Liganden zu Metall, z.B. von Phosphor zu Rhodium, offenbart der Stand der Technik nicht. Ein höheres Molverhältnis Ligand zu Metall führt vermutlich zu einem Ausfallen oder zu einem verstärkten Austrag des Liganden aus der offenbarten nichtwäßrigen ionogen Flüssigkeit.

Nachteilig bei den bekannten Verfahren ist der Austrag des katalytisch aktiven Metalls aus der nichtwäßrigen ionogen Flüssigkeit in die organische Phase. Nach dem Stand der Technik läßt sich dieser Nachteil umgehen, wenn an Stelle von neutralen Liganden, z.B. von Triphenylphosphin, geladene Liganden, z.B. mono- oder trisulfoniertes Triphenylphosphin, verwendet werden, da zu erwarten ist, daß geladene Liganden die Löslichkeit der katalytisch aktiven Metallverbindungen in der nichtwäßrigen ionogenen Flüssigkeit erhöhen. Auch wenn hierdurch der Austrag des katalytisch aktiven Metalls durch Verwendung geladener Liganden reduziert werden konnte, verringern sich jedoch die Ausbeuten an Wertprodukt, z.B. an Aldehyden, auf nur noch 16 bis 33 % (Angew. Chem. 1995, 107 Nr.23/24 Seiten 2941 bis 2943, EP-A-0 776 880).

Es bestand daher die Aufgabe eine nicht mit der organischen Phase mischbare, nichtwäßrige ionogene Flüssigkeit bereitzustellen, die für die Herstellung eines Katalysators geeignet ist, der die Umwandlung der Ausgangsprodukte in die Wertprodukte in einfacher Weise wirtschaftlich in hohen Ausbeuten gestattet.

Diese Aufgabe wird gelöst durch eine nichtwäßrige ionogene Ligandflüssigkeit der allgemeinen Formel (Q^{⊕})ₐA^{a-}, dadurch gekennzeichnet, daß Q^{⊕} für quaternäre Ammonium- und/oder Phosphonium-Kationen der allgemeinen Formeln 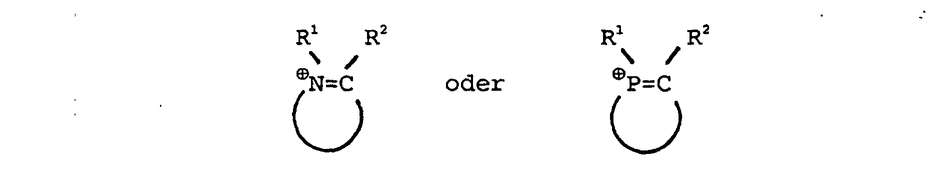 steht, die 1, 2 oder 3 Stickstoffatome und/oder Phosphoratome im Ring tragen, wobei R¹,R² gleich oder verschieden sind und Wasserstoff oder einen geradkettigen oder verzweigten Kohlenwasserstoffrest mit 1 bis 20 Kohlenstoffatomen bedeuten und in denen die Heterocyclen aus 4 bis 10 Ringatomen bestehen; oder dass Q^{⊕} für quaternäre Ammonium- und/oder Phosphonium-Kationen der allgemeinen Formeln R¹R^{2⊕}N=CR³-X-R³C=^{⊕}NR¹R² oder R¹R^{2⊕}P=CR³-X-R³C=^{⊕}PR¹R² steht, wobei R¹, R² und R³ gleich oder verschieden sind und Wasserstoff oder einen geradkettigen oder verzweigten Kohlenwasserstoffrest mit 1 bis 20 Kohlenstoffatomen und X einen Alkylen- oder Phenylenrest bedeutet; oder dass Q^{⊕} für das N-Butylpyridinium-, N-Ethylpyridinium-, 1-n-Butyl-3-methyl-imidazolium-, Diethylpyrazolium-, 1-Ethyl-3-methylimidazolium-, Pyridinium-Kation, für das Tricyclodecan Diammonium-Kation oder das N,N'-Dimethyl-Tricyclodecan Diammonium-Kation steht; oder dass Q^{⊕} für quaternäre Ammonium- und/oder Phosphonium-Kationen der allgemeinen Formeln R¹R²R³N^{⊕} (̵X)̵ N^{⊕}R⁴R⁵R⁶ oder R¹R²R³P^{⊕} (̵X)̵ P^{⊕}R⁴R⁵R⁶ steht, in der R¹, R², R³, R⁴, R⁵ und R⁶ gleich oder verschieden sind und Wasserstoff oder einen geradkettigen oder verzweigten Kohlenwasserstoffrest mit 1 bis 20 Kohlenstoffatomen bedeuten, und X für 1,2-Phenylen, 1,3-Phenylen, 1,4-Phenylen oder für einen Alkylenrest (̵CHR⁷)̵_{b}, wobei R⁷ gleich Wasserstoff oder ein Kohlenwasserstoffrest mit 1 bis 5 Kohlenstoffatomen ist, und b eine ganze Zahl zwischen 1 bis 8 ist, steht und A^{a-} ein Triarylphosphin der allgemeinen Formel 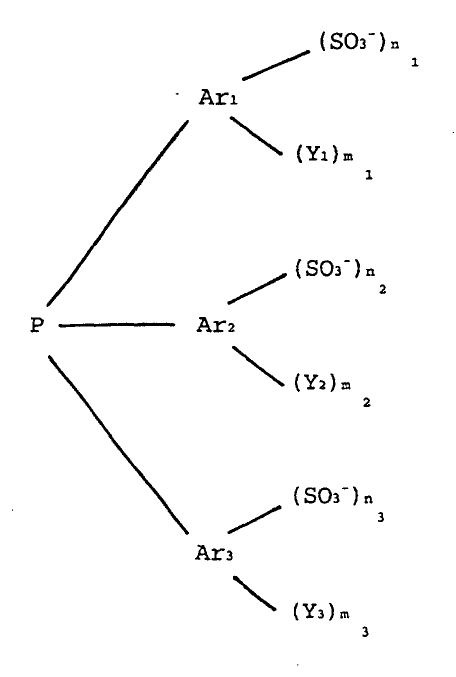 ist, in der Ar¹, Ar² und Ar³ gleiche oder verschiedene Arylgruppen mit 6 bis 14 Kohlenstoffatomen bedeuten, die Substituenten Y₁, Y₂ und Y₃ gleiche oder verschiedene geradkettige oder verzweigte Alkyl- oder Alkoxyreste mit 1 bis 4 Kohlenstoffatomen bedeuten, Chlor, Brom, die Hydroxyl-, Cyanid- oder Nitrogruppe bedeuten, ferner für die Aminogruppe der Formel NR⁸R⁹ stehen, in der die Substituenten R⁸ und R⁹ gleich oder verschieden sind und Wasserstoff, geradkettige oder verzweigte Alkylgruppen mit 1 bis 4 Kohlenstoffatomen bedeuten, in der m₁, m₂ und m₃ gleich oder verschieden sind und ganze Zahlen von 0 bis 5 bedeuten; in der n₁, n₂ und n₃ gleich oder verschieden sind und für ganze Zahlen von 0 bis 3 stehen, wobei mindestens eine der Zahlen n₁, n₂ und n₃ gleich oder größer 1 ist, und in der a gleich n₁+n₂+n₃ ist, und daß über die stöchiometrisch erforderliche Menge zur Bildung von (Q^{⊕})ₐ A^{a-} hinaus ein Überschuß an aus Q^{⊕} abgeleiteten Aminen und/oder Phosphinen von bis zu 5 Äquivalenten oder ein Überschuß an Alkali- und/oder Erdalkalisalzen der Triarylphosphine A^{a-} von bis zu 5 Äquivalenten vorliegt.

Überraschenderweise wurde gefunden, daß sich die erfindungsgemäßen nichtwäßrigen ionogenen Ligandflüssigkeiten nach Zugabe mindestens eines katalytisch wirkenden Übergangsmetalls und/oder dessen Verbindung als Katalysatorsystem in übergangsmetallkatalysierten chemischen Prozessen eignen.

Dabei wurde gefunden, daß die Verwendung der erfindungsgemäßen nichtwäßrigen ionogenen Ligandflüssigkeiten in übergangsmetallkatalysierten Prozessen die Verwendung eines hohen Molverhältnisses von Liganden zu Übergangsmetall, z.B. ein molares Verhältnis von Phosphor zu Rhodium, von mehr als 100 gestattet.

Ein hoher Überschuß an Liganden, z.B. an sulfoniertem Triphenylphosphin, wirkt stabilisierend auf die katalytisch wirksamen Metallkomplexe während des Katalysecyclus.

Wenn im folgenden von Katalysatorsystem gesprochen wird, so ist darunter die nichtwäßrige ionogene Ligandflüssigkeit zusammen mit den katalytisch aktiven Übergangsmetallverbindungen gemeint.

Stabilisierte Katalysatorsysteme zeichnen sich durch geringe Austragsraten an dem katalytisch aktiven Übergangsmetall aus und erlauben ein häufiges Zurückführen des gebrauchten Katalysatorsystems in den Prozeß, ohne daß ein Abfall in der Aktivität und Selektivität beobachtet wird. Stabilisierte Katalysatorsysteme zeigen daher höhere Ausbeuten an Wertprodukt und verlängerte Katalysatorstandzeiten als nicht stabilisierte Katalysatorsysteme.

Bei der Verwendung nichtwäßriger ionogener Flüssigkeiten und nichtwäßriger ionogener Ligandflüssigkeiten ist die Verlängerung der Katalysatorstandzeiten, wie sie bekanntermaßen durch stabilisierte Katalysatorsysteme erzielt werden kann, von besonderer Bedeutung, da die erschöpfte Katalysatorphase nach dem Ausschleusen aus dem Prozeß eine hohe Salzfracht bedeutet, die aufwendig aufgearbeitet und/oder entsorgt werden muß. Ein Erschöpfen des Katalysatorsystems zeigt sich in einem Absinken der Katalysatoraktivität und -selektivität unter ein wirtschaftlich vertretbares Maß an. Aktivitäts- und Selektivitätsabnahme werden z.B. durch das Anreichern von Katalystorabbauprodukten verursacht. Führt man daher übergangsmetallkatalysierte Prozesse in nichtwäßrigen ionogenen Flüssigkeiten durch, ist eine zu rasche Erschöpfung des Katalysatorsystems, die ein nachfolgendes Ausschleusen aus dem Prozeß erfordert, nachteilig. Mit den erfindungsgemäßen nichtwäßrigen ionogenen Ligandenflüssigkeiten gelingt es, vorteilhafte hohe Molverhältnisse Ligand zu Metall einzustellen, die zu stabilisierten Katalysatorsystemen mit langen Katalysatorstandzeiten führen.

Es ist anzunehmen, daß sich unter den jeweiligen Reaktionsbedingungen die katalytisch aktiven Übergangsmetallverbindungen aus dem Übergangsmetall, das entweder in metallischer Form oder als gängige Übergangsmetallverbindung zugesetzt wird, und der nichtwäßrigen ionogenen Ligandflüssigkeit bilden. Die nichtwäßrige ionogene Ligandflüssigkeit und die katalytisch aktive Übergangsmetallverbindung bilden das Katalysatorsystem.

Die erfindungsgemäßen, nicht wäßrigen ionogenen Ligandflüssigkeiten können über die stöchiometrisch erforderliche Menge zur Bildung von (Q^{⊕})ₐA^{a-} hinaus einen Überschuß an aus Q^{⊕} abgeleiteten Aminen und/oder Phosphinen oder einen Überschuß an Alkali- und/oder Erdalkalisalzen der Triarylphosphine A^{a-} enthalten. Im allgemeinen liegt der Überschuß über der stöchiometrisch erforderlichen Menge zur Bildung von (Q^{⊕})ₐA^{a-} hinaus bei bis zu 5 Äquivalenten an aus Q^{⊕} abgeleiteten Aminen und/oder Phosphinen oder an Alkali- und/oder Erdalkalisalzen der Triarylphosphine A^{a-}, vorzugsweise liegt dieser Überschuß bei 0 bis 1 Äquivalent.

Als Kationen Q^{⊕} für die Herstellung der erfindungsgemäßen nichtwäßrigen ionogenen Ligandflüssigkeiten lassen sich heterocyclische Ammonium- und/oder Phosphonium-Kationen der allgemeinen Formel 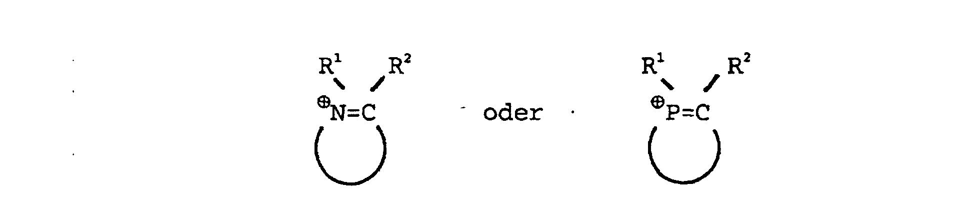 verwenden, die 1, 2 oder 3 Stickstoff- und/oder Phosphoratome im Ring tragen. Die Heterocyclen bestehen aus 4 bis 10, vorzugsweise 5 bis 6 Ringatomen. R¹,R² sind gleich oder verschieden und bedeuten Wasserstoff oder einen geradkettigen oder verzweigten Kohlenwasserstoffrest mit 1 bis 20 Kohlenstoffatomen, beispielsweise einen Alkyl-, Alkenyl-, Cycloalkyl-, Alkylaryl-, Aryl- oder Aralkylrest.

Weiterhin sind quaternäre Ammonium- und Phosphonium-Kationen der allgemeinen Formel

R¹R^{2⊕}N=CR³-X-R³C=^{⊕}NR¹R²

R¹R^{2⊕}P=CR³-X-R³C=^{⊕}PR¹R²

geeignet, in denen R¹, R², und R³ gleich oder verschieden sind und Wasserstoff oder einen geradkettigen oder verzweigten Kohlenwasserstoffrest mit 1 bis 20 Kohlenstoffatomen, beispielsweise einen Alkyl-, Alkenyl-, Cycloalkyl-, Alkylaryl-, Aryl- oder Aralkylrest bedeuten und X einen Alkylen- oder Phenylenrest bedeutet. R¹,R²,R³ sind beispielsweise Wasserstoff, die Methyl, Ethyl-, Propyl-, Isopropyl-, Butyl-, sekundär-Butyl-, tertiär-Butyl-, Amyl-, Methylen-, Ethyliden-, Phenyl-, oder Benzylgruppe. X steht für 1,2-Phenylen, 1,3-Phenylen, 1,4-Phenylen oder für einen Alkylenrest, beispielsweise für den Methylen-, Ethylen-, Propylen- oder 1,4-Butylenrest.

Als Kation Q^{⊕} für die Herstellung der erfindungsgemäßen nichtwäßrigen ionogen Ligandflüssigkeit eignet sich auch das N-Butylpyridinium-, N-Ethylpyridinium-, 1-n-Butyl-3-methylimidazolium-, Diethylpyrazolium-, 1-Ethyl-3-methylimidazolium-, Pyridinium-Kation.

Als weitere Kationen Q^{⊕} eignen sich für die Herstellung der erfindungsgemäßen nichtwäßrigen ionogenen Ligandflüssigkeiten quaternäre Ammonium- und/oder Phosphonium-Kationen der allgemeinen Formel

R¹R²R³N^{⊕} (̵X)̵ N^{⊕}R⁴R⁵R⁶ (quaternäre Diamine)

R¹R²R³P^{⊕} (̵X)̵ P^{⊕}R⁴R⁵R⁶ (quaternäre Diphosphine)

in der R¹, R², R³, R⁴, R⁵ und R⁶ gleich oder verschieden sind und Wasserstoff, geradkettige oder verzweigte Kohlenwasserstoffreste mit 1 bis 20 Kohlenstoffatomen, beispielsweise einen Alkyl-, Alkenyl-, Cycloalkyl-, Alkylaryl-, Aryl- oder Aralkylrest bedeuten, und X für 1,2-Phenylen, 1,3-Phenylen, 1,4-Phenylen oder für einen Alkylenrest (̵CHR⁷)̵_{b}, wobei R⁷ gleich Wasserstoff oder ein Kohlenwasserstoffrest mit 1 bis 5 Kohlenstoffatomen, beispielsweise Methyl, Ethyl, n-Propyl, i-Propyl, n-Butyl, i-Butyl und t-Butyl ist, und b eine ganze Zahl zwischen 1 bis 8 ist, steht. Beispiele für X sind der Methylen, Ethylen, Propylen, Butylen oder 1,4-Phenylenrest.

Die quaternären Ammonium-Kationen der allgemeinen Formel R¹R²R³N^{⊕}(̵X)̵N^{⊕}R⁴R⁵R⁶ werden im folgenden quaternären Diamine genannt.

Zu den quaternären Diaminen, die sich zur Herstellung der erfindungsgemäßen nichtwäßrigen ionogenen Ligandflüssigkeiten eignen, zählen solche quaternäre Diamine der allgemeinen Formel R¹R²R³N^{⊕} (̵CHR⁷)̵_{b} N^{⊕}R⁴R⁵R⁶, in der R¹R²,R³,R⁴,R⁵ und R⁶ gleich oder verschieden sind und für Wasserstoff, n-Butyl, n-Pentyl, n-Hexyl, n-Heptyl, i-Heptyl, n-Octyl, i-Octyl, n-Nonyl, i-Nonyl, n-Decyl, i-Decyl, n-Undecyl, i-Undecyl, n-Dodecyl oder i-Dodecyl stehen, R⁷ Wasserstoff, Methyl oder Ethyl bedeutet, und in der b gleich 2, 3, 4, 5 oder 6 ist.

Besonders geeignet für die Herstellung der erfindungsgemäßen nichtwäßigen ionogenen Ligandflüssigkeiten sind solche quaternären Diamine, die sich von 1-Amino-3-dialkylaminopropanen der allgemeinen Formel

R¹R²N-CH₂-CH₂-CH₂-NH₂

in der R¹ und R² gleiche oder verschiedene geradkettige oder verzweigte Alkylreste mit 4 bis 20 Kohlenstoffatomen, beispielsweise die n-Butyl, n-Pentyl-, n-Hexyl-, n-Heptyl-, i-Heptyl-, n-Octyl-, i-Qctyl-, i-Nonyl-, n-Nonyl-, n-Decyl-, i-Decyl-, n-Undecyl-, i-Undecyl-, n-Dodecyl- oder i-Dodecyl- bedeuten, ableiten lassen.

Insbesondere vorteilhaft lassen sich die erfindungsgemäßen nichtwäßrigen ionogenen Ligandflüssigkeiten herstellen, wenn man 1-Amino-3-(di-n-heptyl)-aminopropan, 1-Amino-3-(di-i-heptyl)-aminopropan, 1-Amino-3-(di-n-octyl)-aminopropan, 1-Amino-3-(di-i-octyl)-aminopropan, 1-Amino-3-(di-n-nonyl)-aminopropan ,1-Amino-3-(di-i-nonyl)-aminopropan, 1-Amino-3-(di-n-undecyl)-aminopropan, 1-Amino-3-(di-i-undecyl)aminopropan, 1-Amino-3- (di-n-dodecyl)aminopropan oder 1-Amino-3-(di-i-dodecyl)aminopropan zur Herstellung der quaternären Diamine verwendet.

Die Herstellung der 1-Amino-3-dialkylaminopropane erfolgt durch Umsetzung der N,N-(dialkyl)amine der allgemeinen Formel,

R¹R²NH

in der R¹ und R² gleiche oder verschiedene geradkettige oder verzweigte Alkylreste mit 4 bis 20 Kohlenstoffatomen, insbesondere die n-Butyl, n-Pentyl-, n-Hexyl-, n-Heptyl-, i-Heptyl-, n-Octyl-, i-Octyl-, i-Nonyl-, n-Nonyl-, n-Decyl-, i-Decyl- n-Undecyl-, i-Undecyl, n-Dodecyl- oder i-Dodecylgruppe bedeuten, mit Acrylnitril nach bekannten Verfahren (vgl. Ullmann's Encyclopedia of Industrial Chemistry Vol. A2, 1985).

Als weitere von Q^{⊕} abgeleitete Diamine lassen sich Tricyclodecan Diamin und N,N'-Dimethyletyl-Tricyclodecan Diamin verwenden.

Zur Herstellung der erfindungsgemäßen nichtwäßrigen ionogenen Ligandflüssigkeit lassen sich die Sulfonatgruppe enthaltenden Triarylphosphine der allgemeinen Formel 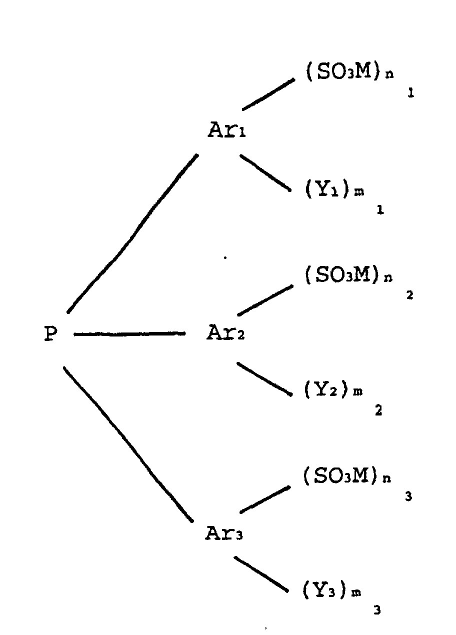 verwenden, in der Ar¹, Ar² und Ar³ gleiche oder verschiedene Arylgruppen mit 6 bis 14 Kohlenstoffatomen bedeuten, die Substituenten Y₁, Y₂ und Y₃ gleiche oder verschiedene geradkettige oder verzweigte Alkyl- oder Alkoxyreste mit 1 bis 4 Kohlenstoffatomen, Chlor, Brom, die Hydroxyl-, Cyanid- oder Nitrogruppe bedeuten, ferner für die Aminogruppe der Formel NR⁸R⁹ stehen, in der die Substituenten R⁸ und R⁹ gleich oder verschieden sind und Wasserstoff, geradkettige oder verzweigte Alkylgruppen mit 1 bis 4 Kohlenstoffatomen bedeuten, in der M für Lithium, Natrium, Kalium, Magnesium, Calcium oder Barium steht, in der m₁, m₂ und m₃ gleich oder verschieden sind und ganze Zahlen von 0 bis 5 bedeuten, in der n₁, n₂ und n₃ gleich oder verschieden sind und für ganze Zahlen von 0 bis 3 stehen, wobei mindestens eine der Zahlen n₁, n₂ und n₃ gleich oder größer 1 ist. Ihre Herstellung ist aus DE PS 26 27 354 bekannt.

Zu den Triarylphosphinen zählen bevorzugt solche Triarylphosphine, bei denen die Gruppen Ar₁, Ar₂, Ar₃ Phenylgruppen sind, Y₁, Y₂ und Y₃ für die Methyl-, die Ethylgruppe, für die Methoxy-, Ethoxygruppe und/oder für ein Chloratom stehen; und die kationischen Reste M anorganische Kationen von Natrium, Kalium, Calcium und Barium sind. Insbesonders geeignet sind solche Triarylphosphine, bei denen Ar₁, Ar₂, Ar₃ jeweils eine Phenylgruppe bedeuten, m₁, m₂, m₃ gleich 0 sind, n₁, n₂, und n₃ gleich 0 oder 1 sind und n₁+n₂+n₃ zusammen 1 bis 3 ausmachen, und bei denen die Sulfonat-Gruppen in meta-Stellung stehen.

Besonders eignen sich wäßrige Lösungen von Natrium-, Kalium-, Calcium- oder Bariumsalzen von (Sulfophenyl)-diphenylphosphin, Di-(sulfophenyl)phenylphosphin oder Tri(sulfophenyl)phosphin. Es lassen sich auch Gemische dieser wäßrigen Lösungen verwenden. Es ist jedoch vorteilhaft, eine einzige wäßrige Salzlösung von einem der genannten Alkali- und Erdalkalielemente, insbesondere eine wäßrige Natrium- oder Kaliumsalzlösung, zu verwenden, wobei diese Lösung auch ein Gemisch aus (Sulfophenyl)-diphenylphosphin, Di-(Sulfophenyl)phenylphosphin und Tri(sulfophenyl)phosphin enthalten kann.
Ein für die Herstellung der erfindungsgemäßen nichtwäßrigen ionogenen Ligandflüssigkeiten geeignetes Gemisch fällt bei der Sulfonierung von Triphenylphosphin an, wie z. B. aus DE OS 26 27 354 bekannt.

Verwendet man Tricyclodecan Diamin oder N,N'-Dimethyl-Tricyclodecan Diamin als Amin zur Herstellung der nichtwäßrigen ionogenen Ligandflüssigkeiten, sollte ein Gemisch mit einem möglichst hohen Gehalt an Di-(sulfophenyl)phenylphosphin verwendet werden.

Die Herstellung der erfindungsgemäßen nichtwäßrigen ionogenen Ligandflüssigkeit erfolgt durch Protonierung und/oder Alkylierung des eingesetzten Amins und/oder Phosphins zu dem einfach- oder mehrfachgeladenen Kation Q^{⊕} durch Säuren und/oder Alkylierungsmittel in Gegenwart einer wäßrigen Lösung von den Alkali- und/oder Erdalkalisalzen der Triarylphosphine A^{a-}.

Als Säuren können Wasserstoffsäuren, z.B. Tetrafluoroborsäure oder Hexafluorophosphorsäure, oder Sauerstoffsäuren, z.B. Phosphorsäure, Schwefelsäure, Salpetersäure, Phosphonsäuren mit 1 bis 20 Kohlenstoffatomen oder Sulfonsäuren mit 1 bis 20 Kohlenstoffatomen verwendet werden. Vorzugsweise verwenden man eine wäßrige Schwefelsäure- oder Phosphorsäurelösung, die im allgemeinen 10 bis 30 Gew.-%ig ist.

Als Alkylierungsmittel verwendet man z.B. Mono- oder Dialkylsulfate oder Dialkylcarbonate mit 1 bis 41 Kohlenstoffatomen oder Alkylhalogenide mit 1 bis 10 Kohlenstoffatomen.

Die Menge an der Säure und/oder dem Alkylierungsmittel liegt im allgemeinen in einem Bereich von 0,9 bis 2,0 Äquivalenten pro Äquivalent der verwendeten Amine und/oder Phosphine. Vorzugsweise verwendet man 1 bis 1,5 Äquivalente pro Äquivalent der verwendeten Amine und/oder Phosphine. Setzt man eine Säure hinzu, so liegt der pH-Wert nach Säurezugabe bei 2 bis 5, vorzugsweise bei 3 bis 4 Einheiten.

Die Mengen an den aus Q^{⊕} abgeleiteten Aminen und/oder Phosphinen und an den Alkali- und/oder Erdalkalisalzen der Triarylphosphine A^{a-} sind so bemessen, daß ein über die stöchiometrisch erforderliche Menge zur Bildung von (Q^{⊕})ₐ A^{a-} hinausgehender Überschuß verwendet werden kann. Im allgemeinen beträgt dieser Überschuß O bis 5 Äquivalente an den aus Q^{⊕} abgeleiteten Aminen und/oder Phosphinen oder an den Alkali- und/oder Erdalkalisalzen der Triarylphosphine A^{a-} .Vorzugsweise liegt dieser Überschuß bei 0 bis 1 Äquivalent.

Von dem jeweiligen Amin und/oder Phosphin wird im allgemeinen eine 20 bis 70 Gew.-%ige, vorzugsweise eine 40 bis 60 Gew.-%ige Lösung in einem organischen Lösungsmittel verwendet.

Als organische Lösungsmittel sind aliphatische oder aromatische Kohlenwasserstoffe, wie z.B. Benzol, Toluol, o-Xylol, m-Xylol, p-Xylol, Mesitylen, n-Heptan, n-Octan, Cyclohexan oder auch Ether, wie z.B. 1,4-Dioxan oder Tetrahydrofuran geeignet. Vorzugsweise verwendet man Toluol oder Cyclohexan als Lösungsmittel.

Die Zugabe der Säure und/oder des Alkylierungsmittels zu der Mischung aus der wäßrigen Lösung der Alkali- und/oder Erdalkalisalze der Triarylphosphine A^{a-} und der organischen Lösung des Amins und/oder Phosphins erfolgt bei einer Temperatur von 0 bis 60°C, vorzugsweise von 20 bis 30°C. Die Dauer der Zugabe liegt im allgemeinen zwischen 0,5 bis 3 Stunden, vorzugsweise zwischen 1 und 2 Stunden.

Man erhält drei Phasen, eine untere wäßrige Phase, die das aus den eingesetzten Triarylphosphinen freigesetzte Alkali- und/oder Erdalkalisalz gelöst enthält, eine mittlere Phase, die die nichtwäßrige lonogene Ligandflüssigkeit darstellt, und eine obere Phase, die aus dem organischen Lösungsmittel, das gegebenenfalls eingesetztes Amin und/oder Phosphin enthält, besteht. Die gewünschte nichtwäßrige ionogene Ligandflüssigkeit läßt sich durch einfache Phasentrennung gewinnen.

Zur Ausbildung der drei Phasen kann es sich als zweckmäßig erweisen, nach der Zugabe der Säure und/oder des Alkylierungsmittels nochmals ein organisches Lösungsmittel hinzuzugeben, vorzugsweise verwendet man das gleiche organische Lösungsmittel wie zum Lösen des Amins und/oder Phosphins. Die Menge des nochmals zugesetzten organischen Lösungsmittels, die erforderlich ist, um eine Trennung in drei Phasen zu beobachten, kann durch einfache Vorversuche ermittelt werden.

In einer weiteren Ausführung kann zunächst eine wäßrige Lösung von den Alkali- und/oder Erdalkalisalzen der Triarylphosphine A^{a-} mit einer Säure und/oder mit einem Alkylierungsmittel versetzt werden und anschließend kann eine organische Lösung an Amin und/oder Phosphin zugegeben werden. Ebenfalls ist es möglich, das zu protonierende und/oder zu alkylierende Amin und/oder Phosphin zunächst mit der Säure und/oder dem Alkylierungsmittel umzusetzen und anschließend eine wäßrige Lösung der Alkali- und/oder Erdalkalisalze der Triarylphosphine A^{a-} hinzuzugeben.

Die erfindungsgemäßen nichtwäßrigen ionogenen Ligandflüssigkeiten sind nicht mit der organischen. Phase mischbar und lassen sich nach Zusatz eines Übergangsmetalls oder einer Übergangsmetallverbindung als Katalysatorsystem in übergangsmetallkatalysierten chemischen Prozessen einsetzen.

Als übergangsmetallkatalysierter chemischer Prozess ist beispielsweise die Hydroformylierung zu nennen.

Zu den katalytisch wirkenden Übergangsmetallen zählen die Elemente der Gruppen VI, VII und VIII des Periodensystems der Elemente. Besonders geeignete Übergangsmetalle sind Kobalt, Rhodium, Iridium, Ruthenium, Palladium oder Platin. Diese Übergangsmetalle gelangen entweder in elementarer Form als Metall oder als Verbindung zum Einsatz. In metallischer Form verwendet man es entweder als feinverteilte Partikel oder in dünner Schicht auf einem Träger, wie Aktivkohle, Calciumcarbonat, Aluminiumsilikat oder Tonerde niedergeschlagen. Als Verbindungen dieser Übergangsmetalle sind z.B. die Metalloxide oder die Salze anorganischer Wasserstoff- und Sauerstoffsäuren, wie die Nitrate, Sulfate oder Phosphate, Carbonylverbindungen, Komplexverbindungen, wie z.B. Cyclooctadienylkomplexe, Cyclopentadienylkomplexe, Acetylacetonatokomplexe oder Salze aliphatischer Mono- und Polycarbonsäuren, wie 2-Ethylhexanoate, Acetate, Propionate, Butyrate, Salze der Valeriansäuren, Malonate oder Oxalate geeignet. Vorzugsweise verwendet man die 2-Ethylhexanoate.

Das Katalysatorsystem kann zunächst in einem Präformierungsschritt gebildet und dann dem Reaktionsgemisch präformiert zugesetzt werden. Dabei wird zu der nichtwäßrigen ionogenen Ligandflüssigkeit die gewünschte Menge an dem Übergangsmetall, entweder in metallischer Form oder als Verbindung hinzugegeben und das Reaktionsgemisch mit den umzusetzenden Agenzien, beispielsweise Wasserstoff und Kohlenmonoxid, behandelt. Dabei ist anzunehmen, daß sich in Gegenwart der Agenzien aus dem zugesetzten Übergangsmetall und/oder seiner Verbindung und der nicht-wäßrigen ionogenen Ligandflüssigkeit das Katalysatorsystem bildet, das bei dem nachfolgenden Zusatz des mit den Agenzien umzusetzenden Eduktes, beispielsweise des Olefins oder der olefinisch ungesättigten Verbindung, die Umsetzung des zugesetzten Eduktes zu den Wertprodukten, beispielsweise zu den Aldehyden, gestattet.

Mit gleich gutem Erfolg läßt sich das Katalysatorsystem auch unter Reaktionsbedingungen, also in Gegenwart des umzusetzenden Eduktes, beispielsweise des Olefins oder der olefinisch ungesättigten Verbindung, herstellen.

Die Umsetzung kann sowohl absatzweise als auch kontinuierlich durchgeführt werden. Nach erfolgter Umsetzung liegt die organische wertprodukthaltige obere Phase und das Katalysatorsystem als untere Phase vor, die durch einfache Phasentrennnung voneinander getrennt werden können. Nach erfolgter Phasentrennung läßt sich das Katalysatorsystem wieder in den Umsetzungsprozeß zurückführen.

Durch die Verwendung der erfindungsgemäßen nichtwäßrigen ionogenen Ligandflüssigkeiten in übergangsmetallkatalysierten chemischen Prozessen kann auf die Zugabe zusätzlicher, nicht als Liganden dienender Anionen in solchen Prozessen verzichtet werden.

Die Verwendung der erfindungsgemäßen nichtwäßrigen ionogenen Ligandflüssigkeiten zur Herstellung von Aldehyden aus Olefinen oder olefinisch ungesättigten Verbindungen ist Gegenstand einer am gleichen Tag eingereichten Patentanmeldung.

Die folgenden Beispiele sollen die Erfindung erläutern, schränken sie jedoch nicht ein.

### Beispiel 1

In einem 2 L Dreihalskolben mit Bodenablauf wurden bei Raumtemperatur 700 g einer Natrium Tri-(sulfophenyl)phosphinlösung mit einem Gehalt an Natrium Tri-(sulfophenyl)phosphin von 453,9 mmol/kg und einem Gehalt an Natrium Di-(sulfophenyl)phenylphosphin von 72,3 mmol/kg mit einer Lösung von 329,3 g 1-Amino-3-(di-noctyl)-aminopropan (Reinheitsgrad 95,6 Gew.-%ig) in 493,9 g Toluol versetzt. Unter Rühren wurden über einen Zeitraum von 2 Stunden 516,4 g Schwefelsäure (20 Gew.-%ig) hinzugegeben. Nach erfolgter Schwefelsäurezugabe ließ man noch 1 Stunde rühren.

Anschließend wurden 200 g Toluol hinzugegeben und es wurde über 10 Minuten aufgerührt. Nach dem Abstellen des Rührers wurde die untere, Natriumhydrogensulfat enthaltende wäßrige Phase abgetrennt und die obere Phase-zur Abtrennung von restlichem überschüssigem Amin mit 500 g Toluol gewaschen. Man erhielt 1449,4 g nichtwäßriger ionogener Ligandflüssigkeit.

### Beispiel 2

In einem 2 L Dreihalskolben mit Bodenablauf wurden bei Raumtemperatur 1000 g einer Natrium Tri-(sulfophenyl)phosphanlösung mit einem Gehalt an Natrium Tri-(sulfophenyl)phosphan von 453 mmol/kg und einem Gehalt an Natrium Di-(sulfophenyl)phenylphosphan von 55 mmol/kg mit einer Lösung von 165,9 g l-Amino-3-(di-i-nonyl)-aminopropan (Reinheitsgrad 97,75 Gew.-%ig) in. 497,8 g Toluol versetzt. Unter Rühren wurden über einen Zeitraum von 1,5 Stunden 248,5 g Schwefelsäure (20 Gew.-%ig) hinzugegeben. Nach erfolgter Schwefelsäurezugabe ließ man noch 1,5 Stunden rühren.

Nach dem Abstellen des Rührers ließ man über 10 Minuten die Phasen sich absetzen und man erhielt drei Phasen. Nach Phasentrennung wurden 735,7 g der mittleren Phase, die die nichtwäßrige lonogene Ligandflüssigkeit bildet, erhalten. Die untere wäßrige Phase enthält Natriumhydrogensulfat, während Toluol die obere Phase bildet.

Die erfindungsgemäßen nichtwäßrigen ionogenen Ligandflüssigkeiten lassen sich nach Zusatz eines Übergangsmetalls oder einer Übergangsmetallverbindung als Katalysatorsystem in übergangsmetallkatalysierten chemischen Prozessen einsetzen.

## Patentansprüche

1. Nichtwäßrige ionogene Ligandflüsigkeit der allgemeinen Formel (Q^{⊕})ₐ A^{a-} **dadurch gekennzeichnet, daß** Q^{⊕} für quaternäre Ammonium- und/oder Phosphonium-Kationen der allgemeinen Formeln 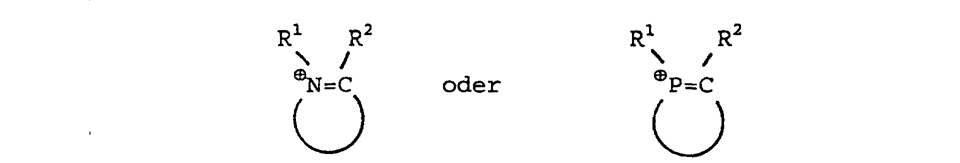 steht, die 1, 2 oder 3 Stickstoffatome und/oder Phosphoratome im Ring tragen, wobei R¹,R² gleich oder verschieden sind und Wasserstoff oder einen geradkettigen oder verzweigten Kohlenwasserstoffrest mit 1 bis 20 Kohlenstoffatomen bedeuten und in denen die Heterocyclen aus 4 bis 10 Ringatomen bestehen; oder dass Q⊕ für quaternäre Ammonium- und/oder Phosphonium-Kationen der allgemeinen Formeln R¹R^{2⊕}N=CR³-X-R³C=^{⊕}NR¹R² oder R¹R^{2⊕}P=CR³-X-R³C=^{⊕}PR¹R² steht, wobei R¹, R² und R³ gleich oder verschieden sind und Wasserstoff oder einen geradkettigen oder verzweigten Kohlenwasserstoffrest mit 1 bis 20 Kohlenstoffatomen und X einen Alkylen- oder Phenylenrest bedeutet; oder dass Q^{⊕} für das N-Butylpyridinium-, N-Ethylpyridinium-, 1-n-Butyl-3-methyl-imidazolium-, Diethylpyrazolium-, 1-Ethyl-3-methylimidazolium-, Pyridinium-Kation, für das Tricyclodecan Diammonium-Kation oder das N,N'-Dimethyl-Tricyclodecan Diammonium-Kation steht; oder dass Q^{⊕} für quaternäre Ammonium- und/oder Phosphonium-Kationen der allgemeinen Formeln R¹R²R³N^{⊕} (̵X)̵ N^{⊕}R⁴R⁵R⁶ oder R¹R²R³P^{⊕} (̵X)̵ P^{⊕}R⁴R⁵R⁶ steht, in der R¹, R², R³, R⁴, R⁵ und R⁶ gleich oder verschieden sind und Wasserstoff oder einen geradkettigen oder verzweigten Kohlenwasserstoffrest mit 1 bis 20 Kohlenstoffatomen bedeuten, und X für 1,2-Phenylen, 1,3-Phenylen, 1,4-Phenylen oder für einen Alkylenrest (̵CHR⁷)̵_{b}, wobei R⁷ gleich Wasserstoff oder ein Kohlenwasserstoffrest mit 1 bis 5 Kohlenstoffatomen ist, und b eine ganze Zahl zwischen 1 bis 8 ist, steht und A^{a-} ein Triarylphosphin der allgemeinen Formel 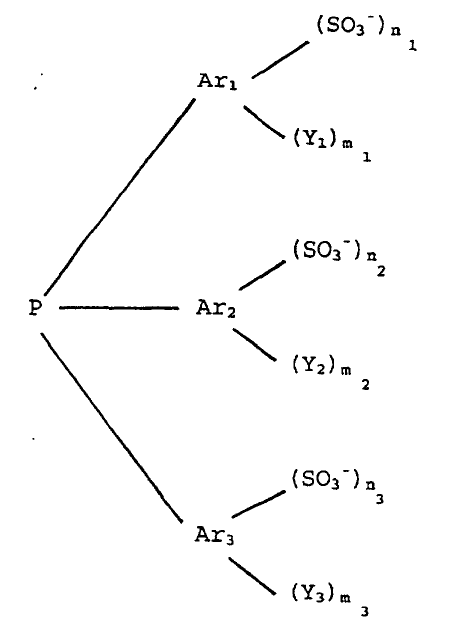 ist, in der Ar¹, Ar² und Ar³ gleiche oder verschiedene Arylgruppen mit 6 bis 14 Kohlenstoffatomen bedeuten, die Substituenten Y₁, Y₂ und Y₃ gleiche oder verschiedene geradkettige oder verzweigte Alkyloder Alkoxyreste mit 1 bis 4 Kohlenstoffatomen bedeuten, Chlor, Brom, die Hydroxyl-, Cyanid- oder Nitrogruppe bedeuten, ferner für die Aminogruppe der Formel NR⁸R⁹ stehen, in der die Substituenten R⁸ und R⁹ gleich oder verschieden sind und Wasserstoff, geradkettige oder verzweigte Alkylgruppen mit 1 bis 4 Kohlenstoffatomen bedeuten, in der m₁, m₂ und m₃ gleich oder verschieden sind und ganze Zahlen von 0 bis 5 bedeuten; in der n₁, n₂ und n₃ gleich oder verschieden sind und für ganze Zahlen von 0 bis 3 stehen, wobei mindestens eine der Zahlen n₁, n₂ und n₃ gleich oder größer 1 ist, und in der a gleich n₁+n₂+n₃ ist, und daß über die stöchiometrisch erforderliche Menge zur Bildung von (Q^{⊕})ₐ A^{a-} hinaus ein Überschuß an aus Q^{⊕} abgeleiteten Aminen und/oder Phosphinen von bis zu 5 Äquivalenten oder ein Überschuß an Alkali- und/oder Erdalkalisalzen der Triarylphosphine A^{a-} von bis zu 5 Äquivalenten vorliegt.

2. Nichtwäßrige ionogene Ligandflüssigkeit nach Anspruch 1, **dadurch gekennzeichnet, daß** über die stöchiometrisch erforderliche Menge zur Bildung von (Q^{⊕})ₐ A^{a-} hinaus ein Überschuß an aus Q^{⊕} abgeleiteten Aminen und/oder Phosphinen von bis zu 1 Äquivalent oder ein Überschuß an Alkali- und/oder Erdalkalisalzen der Triarylphosphine A^{a-} von bis zu 1 Äquivalent vorliegt.

3. Nichtwäßrige ionogene Ligandflüssigkeit nach Anspruch 1 oder 2, **dadurch gekennzeichnet, daß** R¹,R²,R³,R⁴,R⁵ und R⁶ gleich oder verschieden sind und für Wasserstoff, n-Butyl, n-Pentyl, n-Hexyl, n-Heptyl, i-Heptyl, n-Octyl, i-Octyl, n-Nonyl, i-Nonyl-, n-Decyl, i-Decyl, n-Undecyl, i-Undecyl, n-Dodecyl und i-Dodecyl stehen, R⁷ Wasserstoff, Methyl oder Ethyl bedeutet und b gleich 2,3, 4, 5 oder 6 ist.

4. Nichtwäßrige ionogene Ligandflüssigkeit nach Anspruch 3, **dadurch gekennzeichnet, daß** R¹ und R² gleich oder verschieden sind für n-Butyl, n-Pentyl, n-Hexyl, n-Heptyl, i-Heptyl, n-Octyl, i-Octyl, n-Nonyl, i-Nonyl-, n-Decyl, i-Decyl, n-Undecyl, i-Undecyl, n-Dodecyl und i-Dodecyl stehen, R³, R⁴, R⁵ und R⁶ Wasserstoff bedeuten, R⁷ gleich Wasserstoff ist und b gleich 3 ist.

5. Verfahren zur Herstellung einer nichtwäßrigen ionogenen Ligandflüssigkeit der allgemeinen Formel (Q^{⊕})ₐ A^{a-}, in der Q^{⊕} für quaternäre Ammoniumund/oder Phosphonium-Kationen der allgemeinen Formeln 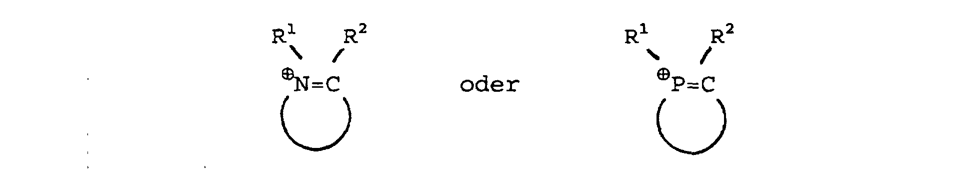 steht, die 1, 2 oder 3 Stickstoffatome und/oder Phosphoratome im Ring tragen, wobei R¹,R² gleich oder verschieden sind und Wasserstoff oder einen geradkettigen oder verzweigten Kohlenwasserstoffrest mit 1 bis 20 Kohlenstoffatomen bedeuten und in denen die Heterocyclen aus 4 bis 10 Ringatomen bestehen; oder dass Q^{⊕} für quaternäre Ammonium- und/oder Phosphonium-Kationen der allgemeinen Formeln R¹R^{2⊕}N=CR³-X-R³C=^{⊕}NR¹R² oder R¹R^{2⊕}P=CR³-X-R³C=^{⊕}PR¹R² steht, wobei R¹, R² und R³ gleich oder verschieden sind und Wasserstoff oder einen geradkettigen oder verzweigten Kohlenwasserstoffrest mit 1 bis 20 Kohlenstoffatomen und X einen Alkylen- oder Phenylenrest bedeutet; oder dass Q^{⊕} für das N-Butylpyridinium-, N-Ethylpyridinium-, 1-n-Butyl-3-methyl-imidazolium-, Diethylpyrazolium-, 1-Ethyl-3-methylimidazolium-, Pyridinium-Kation, für das Tricyclodecan Diammonium-Kation oder das N,N'-Dimethyl-Tricyclode-can Diammonium-Kation steht; oder dass Q^{⊕} für quaternäre Ammonium- und/oder Phosphonium-Kationen der allgemeinen Formeln R¹R²R³N^{⊕} (̵X)̵ N^{⊕}R⁴R⁵R⁶ oder R¹R²R³P^{⊕} (̵X)̵ P^{⊕}R⁴R⁵R⁶ steht, in der R¹, R², R³, R⁴, R⁵ und R⁶ gleich oder verschieden sind und Wasserstoff oder einen geradkettigen oder verzweigten Kohlenwasserstoffrest mit 1 bis 20 Kohlenstoffatomen bedeuten, und X für 1,2-Phenylen, 1,3-Phenylen, 1,4-Phenylen oder für einen Alkylenrest (̵CHR⁷)̵_{b}, wobei R⁷ gleich Wasserstoff oder ein Kohlenwasserstoffrest mit 1 bis 5 Kohlenstoffatomen ist, und b eine ganze Zahl zwischen 1 bis 8 ist, steht und A^{a-} ein Triarylphosphin der allgemeinen Formel 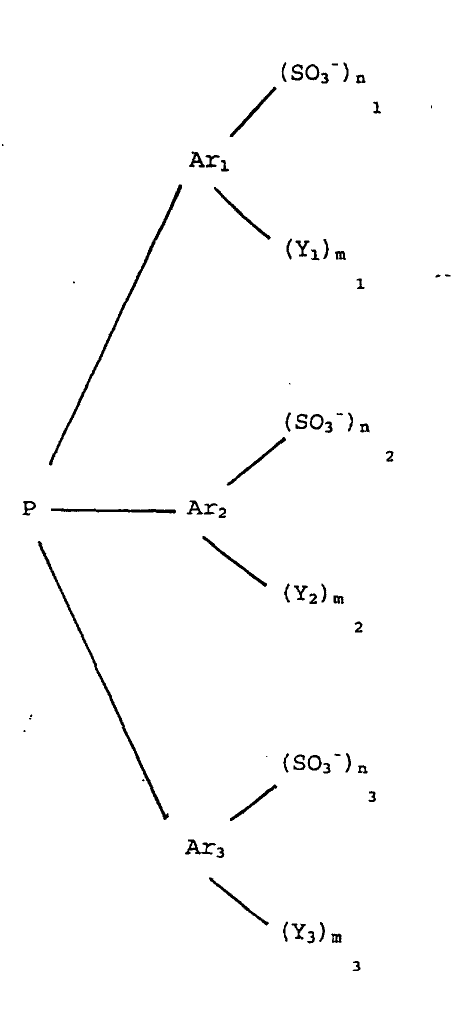 ist, in der Ar¹, Ar² und Ar³ gleiche oder verschiedene Arylgruppen mit 6 bis 14 Kohlenstoffatomen bedeuten, die Substituenten Y₁, Y₂ und Y₃ gleiche oder verschiedene geradkettige oder verzweigte Alkyloder Alkoxyreste mit 1 bis 4 Kohlenstoffatomen bedeuten, Chlor, Brom, die Hydroxyl-, Cyanid- oder Nitrogruppe bedeuten, ferner für die Aminogruppe der Formel NR⁸R⁹ stehen, in der die Substituenten R⁸ und R⁹ gleich oder verschieden sind und Wasserstoff, geradkettige oder verzweigte Alkylgruppen mit 1 bis 4 Kohlenstoffatomen bedeuten, in der m₁, m₂ und m₃ gleich oder verschieden sind und ganze Zahlen von 0 bis 5 bedeuten; in der n₁, n₂ und n₃ gleich oder verschieden sind und für ganze Zahlen von 0 bis 3 stehen, wobei mindestens eine der Zahlen n₁, n₂ und n₃ gleich oder größer 1 ist, und in der a gleich n₁+n₂+n₃ ist, und in der über die stöchiometrisch erforderliche Menge zur Bildung von (Q^{⊕})ₐ A^{a-} hinaus ein Überschuß an aus Q^{⊕} abgeleiteten Aminen und/oder Phosphinen von bis zu 5 Äquivalenten oder ein Überschuß an Alkali- und/oder Erdalkalisalzen der Triarylphosphine A^{a-} von bis zu 5 Äquivalenten vorliegt, **dadurch gekennzeichnet, daß** eine Lösung des aus Q^{⊕} abgeleiteten Amins und/oder Phosphins mit einer Säure und/oder einem Alkylierungsmittel in Gegenwart einer wäßrigen Lösung von den Alkaliund/oder Erdalkalisalzen der Triarylphosphine A^{a-} umgesetzt wird.

6. Verfahren zur Herstellung einer nichtwäßrigen ionogenen Ligandflüssigkeit nach Anspruch 5, **dadurch gekennzeichnet, daß** 0,9 bis 2,0 Äquivalente an Säure und/oder Alkylierungsmittel pro Äquivalent Amin und/oder Phosphin verwendet werden.

7. Verfahren zur Herstellung einer nichtwäßrigen ionogenen Ligandflüssigkeit nach einem der Ansprüche 5 oder 6, **dadurch gekennzeichnet, daß** 1 bis 1,5 Äquivalente an Säure und/oder Alkylierungsmittel pro Äquivalent Amin und/oder Phosphin verwendet werden.

8. Verfahren zur Herstellung einer nichtwäßrigen ionogenen Ligandflüssigkeiten nach einem der Ansprüche 5 bis 7, **dadurch gekennzeichnet, daß** als Säure Phosphorsäure, Schwefelsäure, Salpetersäure, Phosphonsäuren mit 1 bis 20 Kohlenstoffatomen oder Sulfonsäuren mit 1 bis 20 Kohlenstoffatomen verwendet werden.

9. Verfahren zur Herstellung einer nichtwäßrigen ionogenen Ligandflüssigkeiten nach einem der Ansprüche 5 bis 8, **dadurch gekennzeichnet, daß** als Säure eine wäßrige Phosphorsäurelösung oder Schwefelsäurelösung verwendet wird.

10. Verfahren zur Herstellung einer nichtwäßrigen ionogenen Ligandflüssigkeit nach einem der Ansprüche 5 bis 7, **dadurch gekennzeichnet, daß** als Alkylierungsmittel Mono- oder Dialkylsulfate oder Dialkylcarbonate mit 1 bis 41 Kohlenstoffatomen oder Alkylhalogenide mit 1 bis 10 Kohlenstoffatomen verwendet werden.

11. Verfahren zur Herstellung einer nichtwäßrigen ionogenen Ligandflüssigkeit nach einem der Ansprüche 5 bis 10, **dadurch gekennzeichnet, daß** eine wäßrige, aus der Sulfonierung von Triphenylphosphin erhaltene Natrium- oder Kaliumsalzlösung verwendet wird.

12. Verfahren zur Herstellung einer nichtwäßrigen ionogenen Ligandflüssigkeit nach einem der Ansprüche 5 bis 11, **dadurch gekennzeichnet, daß** als Lösungsmittel für das aus Q^{⊕} abgeleitete Amin und/oder Phosphin Benzol, Toluol, o-Xylol, m-Xylol, p-Xylol, Mesitylen, n-Heptan, n-Octan, Cyclohexan, Tetrahydrofuran oder 1,4-Dioxan verwendet wird.

13. Verfahren zur Herstellung einer nichtwäßrigen ionogen Ligandflüssigkeit nach einem der Ansprüche 5 bis 12, **dadurch gekennzeichnet, daß** die Herstellung bei einer Temperatur von 0 bis 60°C, vorzugsweise 20 bis 30°C, erfolgt.

14. Verwendung der nichtwäßrigen ionogenen Ligandflüssigkeit nach einem oder mehreren der Ansprüche 1 bis 4 als Katalysatorbestandteil in übergangsmetallkatalysierten chemischen Prozessen, die unter nichtwäßrigen Bedingungen durchgeführt werden.

15. Verwendung der nichtwäßrigen ionogenen Ligandflüssigkeit nach Anspruch 14 als Katalysatorbestandteil in einem Zweiphasenprozeß, der unter nichtwäßrigen Bedingungen durchgeführt wird.

## Claims

1. A nonaqueous ionic ligand liquid of the formula (Q^{⊕})ₐA^{a-}, wherein Q^{⊕} is a quaternary ammonium and/or phosphonium cation of the formula 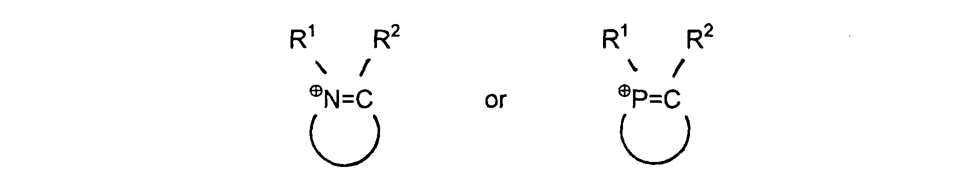 which have 1, 2 or 3 nitrogen atoms and/or phosphorus atoms in the ring, where R¹, R² are identical or different and are each hydrogen or a straight-chain or branched hydrocarbon radical having from 1 to 20 carbon atoms and in which the heterocycles have from 4 to 10 ring atoms; or wherein Q^{⊕} is a quaternary ammonium and/or phosphonium cation of the formula R¹R^{2⊕}N=CR³-X-R³C=^{⊕}NR¹R² or R¹R^{2⊕}P=CR³-X-R³C=^{⊕}PR¹R², where R¹, R² and R³ are identical or different and are each hydrogen or a straight-chain or branched hydrocarbon radical having from 1 to 20 carbon atoms and X is an alkylene or phenylene radical; or wherein Q^{⊕} is the N-butylpyridinium, N-ethylpyridinium, 1-n-butyl-3-methylimidazolium, diethylpyrazolium, 1-ethyl-3-methylimidazolium, pyridinium cation, the tricyclodecanediammonium cation or the N,N'-dimethyltricyclodecane-diammonium cation; or wherein Q^{⊕} is a quaternary ammonium and/or phosphonium cation of the formula R¹R²R³N^{⊕} (̵X)̵ N^{⊕}R⁴R⁵R⁶ or R¹R²R³P^{⊕} (̵X)̵ P^{⊕}R⁴R⁵R⁶ in which R¹, R², R³, R⁴, R⁵ and R⁶ are identical or different and are each hydrogen or a straight-chain or branched hydrocarbon radical having from 1 to 20 carbon atoms and X is 1,2-phenylene, 1,3-phenylene, 1 ,4-phenylene or an alkylene radical (̵CHR⁷)̵ _{b}, where R⁷ is hydrogen or a hydrocarbon radical having from 1 to 5 carbon atoms and b is an integer from 1 to 8, and A^{a-} is a triarylphosphine of the formula 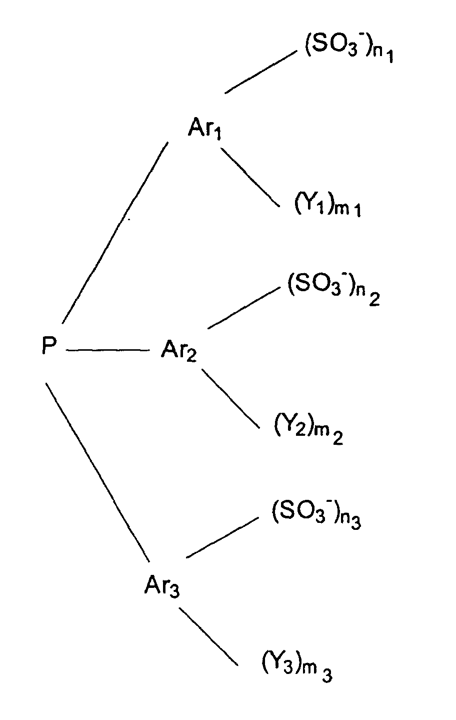 where Ar¹, Ar² and Ar³ are identical or different aryl groups having from 6 to 14 carbon atoms, the substituents Y₁, Y₂ and Y₃ are identical or different straight-chain or branched alkyl or alkoxy radicals having from 1 to 4 carbon atoms, chlorine, bromine, hydroxyl, cyano, nitro or amino groups of the formula NR⁸R⁹, where the substituents R⁸ and R⁹ are identical or different and are hydrogen, straight-chain or branched alkyl groups having from 1 to 4 carbon atoms,
m₁, m₂ and m₃ are identical or different and are integers from 0 to 5,
n₁, n₂ and n₃ are identical or different and are integers from 0 to 3,
where at least one of the numbers n₁, n₂ and n₃ is equal to or greater than 1, and
a is n₁+n₂+n₃,
and amines and/or phosphines derived from Q^{⊕} are present in an excess of up to 5 equivalents over the stoichiometrically required amounts for the formation of (Q^{⊕})ₐA^{a-} or alkali metal and/or alkaline earth metal salts of the triarylphosphines A^{a-} are present in an excess of up to 5 equivalents over the stoichiometrically required amounts for the formation of (Q^{⊕})ₐA^{a-}.

2. A nonaqueous ionic ligand liquid as claimed in claim 1, wherein amines and/or phosphines derived from Q^{⊕} are present in an excess of up to 1 equivalent over the stoichiometrically required amount for the formation of (Q^{⊕})ₐA^{a-} or alkali metal or alkaline earth metal salts of the triarylphosphines A^{a-} are present in an excess of up to 1 equivalent over the stoichiometrically required amount for the formation of (Q^{⊕})ₐA^{a-}.

3. A nonaqueous ionic ligand liquid as claimed in claim 1 or 2, wherein R¹, R², R³, R⁴, R⁵ and R⁶ are identical or different and are hydrogen, n-butyl, n-pentyl, n-hexyl, n-heptyl, i-heptyl, n-octy, i-octyl, n-nonyl, i-nonyl, n-decyl, i-decyl, n-undecyl, i-undecyl, n-dodecyl or i-dodecyl, R⁷ is hydrogen, methyl or ethyl and b is 2, 3, 4, 5 or 6.

4. A nonaqueous ionic ligand liquid as claimed in claim 3, wherein R¹ and R² are identical or different and are n-butyl, n-pentyl, n-hexyl, n-heptyl, i-heptyl, n-octyl, i-octyl, n-nonyl, i-nonyl, n-decyl, i-decyl, n-undecyl, i-undecyl, n-dodecyl or i-dodecyl, R³, R⁴, R⁵ and R⁶ are hydrogen, R⁷ is hydrogen and b is 3.

5. A process for preparing a nonaqueous ionic ligand liquid of the formula (Q^{⊕})ₐA^{a-}, where Q^{⊕} is a quaternary ammonium and/or phosphonium cation of the formula 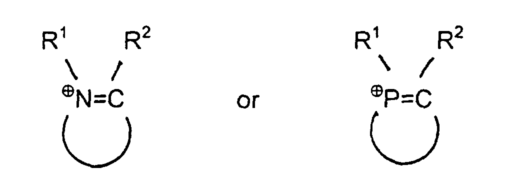 which have 1, 2 or 3 nitrogen atoms and/or phosphorus atoms in the ring, where R¹, R² are identical or different and are each hydrogen or a straight-chain or branched hydrocarbon radical having from 1 to 20 carbon atoms and in which the heterocycles have from 4 to 10 ring atoms; or wherein Q^{⊕} is a quaternary ammonium and/or phosphonium cation of the formula R¹R^{2⊕}N=CR³-X-R³C=^{⊕}NR¹R² or R¹R^{2⊕}P=CR³-X-R³C=^{⊕}PR¹R², where R¹, R² and R³ are identical or different and are each hydrogen or a straight-chain or branched hydrocarbon radical having from 1 to 20 carbon atoms and X is an alkylene or phenylene radical; or wherein Q^{⊕} is the N-butylpyridinium, N-ethylpyridinium, 1-n-butyl-3-methylimidazolium, diethylpyrazolium, 1-ethyl-3-methylimidazolium, pyridinium cation, the tricyclodecanediammonium cation or the N,N'-dimethyltricyclodecane-diammonium cation; or wherein Q^{⊕} is a quaternary ammonium and/or phosphonium cation of the formula R¹R²R³N^{⊕} (̵X)̵ N^{⊕}R⁴R⁵R⁶ or R¹R²R³P^{⊕} (̵X)̵ P^{⊕}R⁴R⁵R⁶ in which R¹, R², R³, R⁴, R⁵ and R⁶ are identical or different and are each hydrogen or a straight-chain or branched hydrocarbon radical having from 1 to 20 carbon atoms and X is 1,2-phenylene, 1,3-phenylene, 1,4-phenylene or an alkylene radical (̵CHR⁷)̵_{b}, where R⁷ is hydrogen or a hydrocarbon radical having from 1 to 5 carbon atoms and b is an integer from 1 to 8, and A^{a-} is a triarylphosphine of the formula 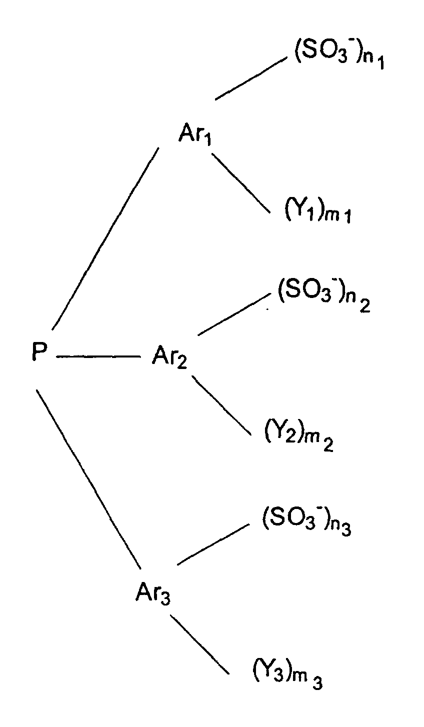 where Ar¹, Ar² and Ar³ are identical or different aryl groups having from 6 to 14 carbon atoms, the substituents Y₁, Y₂ and Y₃ are identical or different straight-chain or branched alkyl or alkoxy radicals having from 1 to 4 carbon atoms, chlorine, bromine, hydroxyl, cyano, nitro or amino groups of the formula NR⁸R⁹, where the substituents R⁸ and R⁹ are identical or different and are hydrogen, straight-chain or branched alkyl groups having from 1 to 4 carbon atoms,
m₁, m₂ and m₃ are identical or different and are integers from 0 to 5,
n₁, n₂ and n₃ are identical or different and are integers from 0 to 3,
where at least one of the numbers n₁, n₂ and n₃ is equal to or greater than 1, and
a is n₁+n₂+n₃,
and amines and/or phosphines derived from Q^{⊕} are present in an excess of up to 5 equivalents over the stoichiometrically required amounts for the formation of (Q^{⊕})ₐA^{a-} or alkali metal and/or alkaline earth metal salts of the triarylphosphines A^{a-} are present in an excess of up to 5 equivalents over the stoichiometrically required amounts for the formation of (Q^{⊕})ₐA^{a-}, which comprises reacting a solution of the amine and/or phosphine derived from Q^{⊕}, with an acid and/or an alkylating agent in the presence of an aqueous solution of the alkali metal and/or alkaline earth metal salts of the triarylphosphines A^{a-}.

6. The process for preparing nonaqueous ionic ligand liquids as claimed in claim 5, wherein from 0.9 to 2.0 equivalents of acid and/or alkylating agent are used per equivalent of amine and/or phosphine.

7. The process for preparing a nonaqueous ionic ligand liquid as claimed in claim 5 or 6, wherein from 1 to 1.5 equivalents of acid and/or alkylating agent are used per equivalent of amine and/or phosphine.

8. The process for preparing a nonaqueous ionic ligand liquid as claimed in any of claims 5 to 7, wherein the acid used is phosphoric acid, sulfuric acid, nitric acid, a phosphonic acid having from 1 to 20 carbon atoms or a sulfonic acid having from 1 to 20 carbon atoms.

9. The process for preparing a nonaqueous ionic ligand liquid as claimed in any of claims 5 to 8, wherein the acid used is an aqueous phosphoric acid solution or sulfuric acid solution.

10. The process for preparing a nonaqueous ionic ligand liquid as claimed in any of claims 5 to 7, wherein the alkylating agent used is a monoalkyl or dialkyl sulfate or a dialkyl carbonate having from 1 to 41 carbon atoms or an alkyl halide having from 1 to 10 carbon atoms.

11. The process for preparing a nonaqueous ionic ligand liquid as claimed in any of claims 5 to 10, wherein an aqueous sodium or potassium salt solution obtained from the sulfonation of triphenylphosphine is used.

12. The process for preparing a nonaqueous ionic ligand liquid as claimed in any of claims 5 to 11, wherein benzene, toluene, o-xylene, m-xylene, p-xylene, mesitylene, n-heptane, n-octane, cyclohexane, tetrahydrofuran or 1,4-dioxane is used as solvent for the amine and/or phosphine derived from Q^{⊕}.

13. The process for preparing a nonaqueous ionic ligand liquid as claimed in any of claims 5 to 12 carried out at a temperature of from 0 to 60°C, preferably from 20 to 30°C.

14. The use of a nonaqueous ionic ligand liquid as claimed in one or more of claims 1 to 4 as a catalyst constituent in chemical processes catalyzed by transition metals, carried out under nonaqueous conditions.

15. The use of a nonaqueous ionic ligand liquid as claimed in claim 14 as a catalyst constituent in a two-phase process, carried out under nonaqueous conditions.

## Revendications

1. Liquide ligand ionogène non aqueux de formule générale (Q^{⊕})a A^{a-}, **caractérisé en ce que** Q^{⊕} représente des cations ammonium quaternaire et/ou phosphonium quaternaire de formules générales 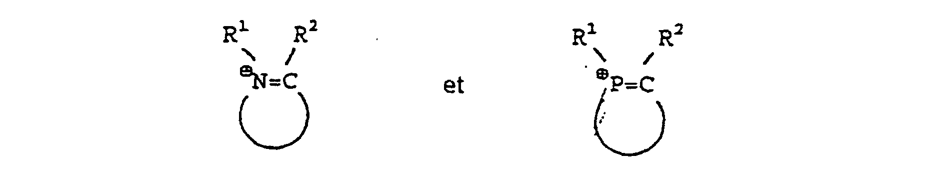 qui portent 1, 2 ou 3 atomes d'azote et/ou de phosphore dans le cycle, R¹, R² étant identiques ou différents et représentant un atome d'hydrogène ou un radical hydrocarboné à chaîne droite ou ramifiée ayant de 1 à 20 atomes de carbone, et dans lesquels les hétérocycles sont constitués de 4 à 10 atomes formant le cycle ; ou **en ce que** Q^{⊕} représente des cations ammonium quaternaire et/ou phosphonium quaternaire de formules générales R¹R^{2⊕}N=CR³-X-R³C=^{⊕}NR¹R² et R¹R^{2⊕}P=CR³-X-R³C=^{⊕}PR¹R², R¹, R² et R³ étant identiques ou différents et représentant un atome d'hydrogène ou un radical hydrocarboné à chaîne droite ou ramifiée ayant de 1 à 20 atomes de carbone; et X représentant un radical alkylène ou phénylène ; ou **en ce que** Q^{⊕} représente le cation N-butylpyridinium, N-éthylpyridinium, 1-n-butyl-3-méthylimidazolium, diéthylpyrazolium, 1-éthyl-3-méthylimidazolium, pyridinium, le cation tricyclodécanediammonium ou le cation N,N'-diméthyltricyclodécanediammonium ; ou **en ce que** Q^{⊕} représente des cations ammonium quaternaire et/ou phosphonium quaternaire de formules générales R¹R²R³N^{⊕}(̵X)̵N^{⊕}R⁴R⁵R⁶ et R¹R²R³P^{⊕}(̵X)̵P^{⊕}R⁴R⁵R⁶, dans lesquelles R¹, R², R³, R⁴, R⁵ et R⁶ sont identiques ou différents et représentent un atome d'hydrogène ou un radical hydrocarboné à chaîne droite ou ramifiée, ayant de 1 à 20 atomes de carbone, et X représente le groupe 1,2-phénylène, 1,3-phénylène, 1,4-phénylène ou un radical alkylène (̵CHR⁷)̵_{b}, R⁷ étant un atome d'hydrogène ou un radical hydrocarboné ayant de 1 à 5 atomes de carbone, et b étant un nombre entier compris entre 1 et 8, et A^{a-} est une triarylphosphine de formule générale 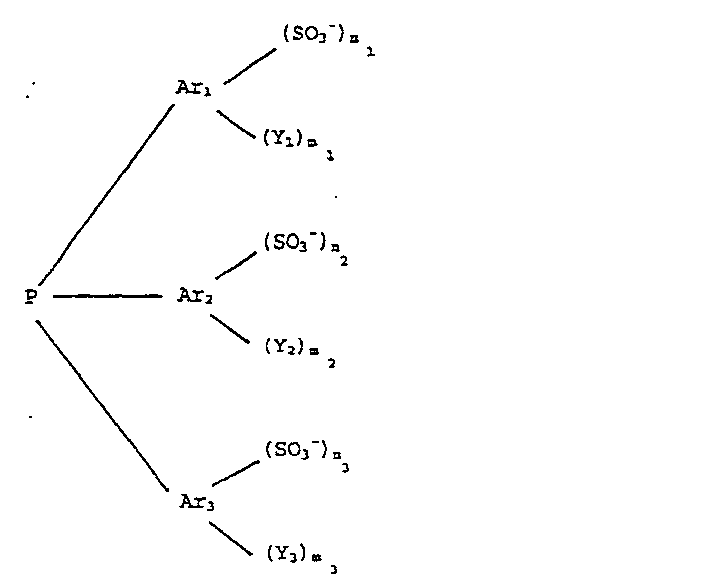 dans laquelle Ar¹, Ar² et Ar³ représentent des groupes aryle identiques ou différents ayant de 6 à 14 atomes de carbone, les substituants Y₁, Y₂ et Y₃ représentent des radicaux alkyle ou alcoxy identiques ou différents, à chaîne droite ou ramifiée, ayant de 1 à 4 atomes de carbone, un atome de chlore, de brome ou le groupe hydroxy, cyano ou nitro, en outre, le groupe amino de formule NR⁸R⁹, dans laquelle les substituants R⁸ et R⁹ sont identiques ou différents et représentent un atome d'hydrogène, des groupes alkyle à chaîne droite ou ramifiée ayant de 1 à 4 atomes de carbone, dans laquelle m₁, m₂ et m₃ sont identiques ou différents et représentent des nombres entiers allant de 0 à 5, dans laquelle n₁, n₂ et n₃ sont identiques ou différents et représentent des nombres entiers allant de 0 à 3, au moins l'un des nombres n₁, n₂ et n₃ étant égal ou supérieur à 1, et dans laquelle a est égal à n₁ + n₂ + n₃, et **en ce que**, par rapport à la quantité stoechiométriquement requise pour la formation de (Q^{⊕})aA^{a-}, est présent un excès d'aminés et/ou de phosphines dérivées de Q^{⊕} allant jusqu'à 5 équivalents, ou un excès de sels alcalins et/ou alcalino-terreux des triarylphosphines A^{a-} allant jusqu'à 5 équivalents.

2. Liquide ligand ionogène non aqueux selon la revendication 1, **caractérisé en ce que**, par rapport à la quantité stoechiométriquement requise pour la formation de (Q^{⊕})a A^{a-}, est présent un excès d'aminés et/ou de phosphines dérivées de Q^{⊕} allant jusqu'à 1 équivalent ou un excès de sels alcalins et/ou alcalino-terreux des triarylphosphines A^{a-} allant jusqu'à 1 équivalent.

3. Liquide ligand ionogène non aqueux selon la revendication 1 ou 2, **caractérisé en ce que** R¹, R², R³, R⁴, R⁵ et R⁶ sont identiques ou différents et représentent un atome d'hydrogène ou un groupe n-butyle, n-pentyle, n-hexyle, n-heptyle, isoheptyle, n-octyle, isooctyle, n-nonyle, isononyle, n-décyle, isodécyle, n-undécyle, iso-undécyle, n-dodécyle ou isododécyle, R⁷ représente un atome d'hydrogène ou le groupe méthyle ou éthyle, et b est égal à 2, 3, 4, 5 ou 6.

4. Liquide ligand ionogène non aqueux selon la revendication 3, **caractérisé en ce que** R¹ et R² sont identiques ou différents et représentent le groupe n-butyle, n-pentyle, n-hexyle, n-heptyle, isoheptyle, n-octyle, isooctyle, n-nonyle, isononyle, n-décyle, isodécyle, n-undécyle, iso-undécyle, n-dodécyle ou isododécyle, R³, R⁴, R⁵ et R⁶ représentent un atome d'hydrogène, R⁷ est un atome d'hydrogène et b est égal à 3.

5. Procédé pour la préparation d'un liquide ligand ionogène non aqueux de formule générale (Q^{⊕})a A^{a-}, dans laquelle Q^{⊕} représente des cations ammonium quaternaire et/ou phosphonium quaternaire de formules générales 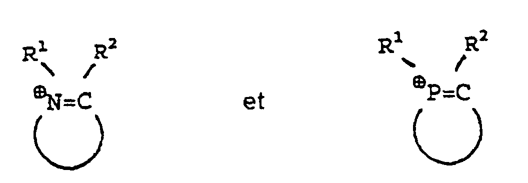 qui portent 1, 2 ou 3 atomes d'azote et/ou de phosphore dans le cycle, R¹, R² étant identiques ou différents et représentant un atome d'hydrogène ou un radical hydrocarboné à chaîne droite ou ramifiée ayant de 1 à 20 atomes de carbone, et dans lesquels les hétérocycles sont constitués de 4 à 10 atomes formant le cycle ; ou dans laquelle Q^{⊕} représente des cations ammonium quaternaire et/ou phosphonium quaternaire de formules générales R¹R^{2⊕}N=CR³-X-R³C=^{⊕}NR¹R² et R¹R^{2⊕}P=CR³-X-R³C=^{⊕}PR¹R², R¹, R² et R³ étant identiques ou différents et représentant un atome d'hydrogène ou un radical hydrocarboné à chaîne droite ou ramifiée ayant de 1 à 20 atomes de carbone, et X représentant un radical alkylène ou phénylène ; ou dans laquelle Q^{⊕} représente le cation N-butylpyridinium, N-éthylpyridinium, 1-n-butyl-3-méthylimidazolium, diéthylpyrazolium, 1-éthyl-3-méthylimidazolium, pyridinium, le cation tricyclodécanediammonium ou le cation N,N'-diméthyltricyclodécanediammonium ; ou dans laquelle Q^{⊕} représente des cations ammonium quaternaire et/ou phosphonium quaternaire de formules générales R¹R²R³N^{⊕}(̵X)̵N^{⊕}R⁴R⁵R⁶ et R¹R²R³P^{⊕}(̵X)̵P^{⊕}R⁴R⁵R⁶, dans lesquelles R¹, R², R³, R⁴, R⁵ et R⁶ sont identiques ou différents et représentent un atome d'hydrogène ou un radical hydrocarboné à chaîne droite ou ramifiée, ayant de 1 à 20 atomes de carbone, et X représente le groupe 1,2-phénylène, 1,3-phénylène, 1,4-phénylèn ou un radical alkylène (̵CHR⁷)̵_{b}, R⁷ étant un atome d'hydrogène ou un radical hydrocarboné ayant de 1 à 5 atomes de carbone, et b étant un nombre entier compris entre 1 et 8, et A^{a-} est une triarylphosphine de formule générale 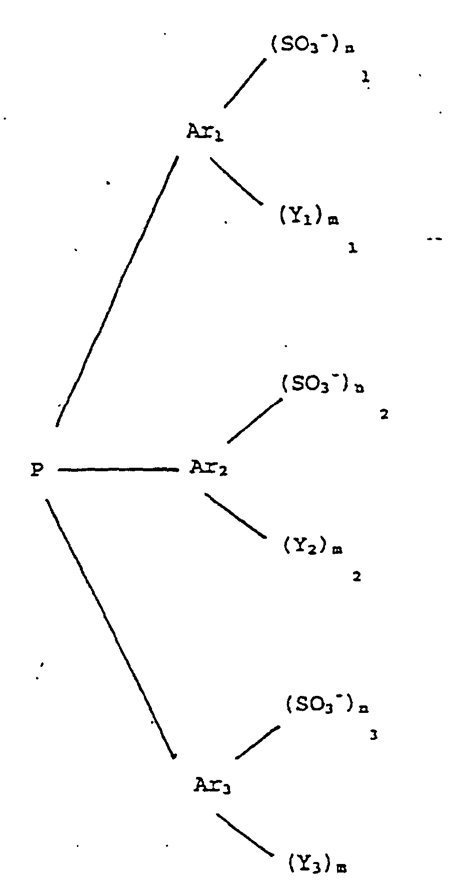 dans laquelle Ar¹, Ar² et Ar³ représentent des groupes aryle identiques ou différents ayant de 6 à 14 atomes de carbone, les substituants Y₁, Y₂ et Y₃ représentent des radicaux alkyle ou alcoxy identiques ou différents, à chaîne droite ou ramifiée, ayant de 1 à 4 atomes de carbone, un atome de chlore, de brome ou le groupe hydroxy, cyano ou nitro, en outre, le groupe amino de formule NR⁸R⁹, dans laquelle les substituants R⁸ et R⁹ sont identiques ou différents et représentent un atome d'hydrogène, des groupes alkyle à chaîne droite ou ramifiée ayant de 1 à 4 atomes de carbone, dans laquelle m₁, m₂ et m₃ sont identiques ou différents et représentent des nombres entiers allant de 0 à 5, dans laquelle n₁, n₂ et n₃ sont identiques ou différents et représentent des nombres entiers allant de 0 à 3, au moins l'un des nombres n₁, n₂ et n₃ étant égal ou supérieur à 1, et dans laquelle a est égal à n₁ + n₂ + n₃, et dans laquelle, par rapport à la quantité stoechiométriquement requise pour la formation de (Q^{⊕})aA^{a-}, est présent un excès d'aminés et/ou de phosphines dérivées de Q^{⊕} allant jusqu'à 5 équivalents, ou un excès de sels alcalins et/ou alcalino-terreux des triarylphosphines A^{a-} allant jusqu'à 5 équivalents, **caractérisé en ce qu'**on fait réagir une solution de l'amine et/ou de la phosphine dérivée de Q^{⊕} avec un acide et/ou un agent d'alkylation, en présence d'une solution aqueuse de sels alcalins et/ou alcalino-terreux des triarylphosphines A^{a-}.

6. Procédé pour la préparation d'un liquide ligand ionogène non aqueux selon la revendication 5, **caractérisé en ce qu'**on utilise de 0,9 à 2,0 équivalents d'acide et/ou d'agent d'alkylation par équivalent d'aminé et/ou de phosphine.

7. Procédé pour la préparation d'un liquide ligand ionogène non aqueux selon la revendication 5 ou 6, **caractérisé en ce qu'**on utilise de 1 à 1,5 équivalent d'acide et/ou d'agent d'alkylation par équivalent d'aminé et/ou de phosphine.

8. Procédé pour la préparation d'un liquide ligand ionogène non aqueux selon l'une quelconque des revendications 5 à 7, **caractérisé en ce qu'**on utilise comme acide l'acide phosphorique, l'acide sulfurique, l'acide nitrique, des acides phosphoniques ayant de 1 à 20 atomes de carbone ou des acides sulfoniques ayant de 1 à 20 atomes de carbone.

9. Procédé pour la préparation d'un liquide ligand ionogène non aqueux selon l'une quelconque des revendications 5 à 8, **caractérisé en ce qu'**on utilise comme acide une solution aqueuse d'acide phosphorique ou une solution aqueuse d'acide sulfurique.

10. Procédé pour la préparation d'un liquide ligand ionogène non aqueux selon l'une quelconque des revendications 5 à 7, **caractérisé en ce qu'**on utilise comme agent d'alkylation des sulfates de mono- ou dialkyle ou des carbonates de dialkyle ayant de 1 à 41 atomes de carbone, ou des halogénures d'alkyle ayant de 1 à 10 atomes de carbone.

11. Procédé pour la préparation d'un liquide ligand ionogène non aqueux- selon l'une quelconque des revendications 5 à 10, **caractérisé en ce qu'**on utilise une solution aqueuse d'un sel de sodium ou de potassium obtenue à partir de la sulfonation de la triphénylphosphine.

12. Procédé pour la préparation d'un liquide ligand ionogène non aqueux selon l'une quelconque des revendications 5 à 11, **caractérisé en ce qu'**on utilise comme solvant pour l'aminé et/ou la phosphine dérivée de Q^{⊕} le benzène, le toluène, l'o-xylène, le m-xylène, le p-xylène, le mésitylène, le n-heptane, le n-octane, le cyclohexane, le tétrahydrofuranne ou le 1,4-dioxanne.

13. Procédé pour la préparation d'un liquide ligand ionogène non aqueux selon l'une quelconque des revendications 5 à 12, **caractérisé en ce que** la préparation s'effectue à une température de 0 à 60°C, de préférence de 20 à 30°C.

14. Utilisation du liquide ligand ionogène non aqueux selon une ou plusieurs des revendications 1 à 4, en tant que composant de catalyseur dans des processus chimiques catalysés par des métaux de transition, qui sont effectués dans des conditions non aqueuses.

15. Utilisation du liquide ligand ionogène non aqueux selon la revendication 14, en tant que composant de catalyseur dans un processus en deux phases qui est effectué dans des conditions non aqueuses.
